# EUROPEAN PATENT APPLICATION

(11) **EP 3 453 588 A1**
(43) Date of publication of application: **13.03.2019**
(21) Application number: 18192458.0
(22) Date of filing: 04.09.2018
(51) Int. Cl.: B62B 7/00, B62B 9/12, B62B 9/28

(54) **SET FOR TRANSPORTING AT LEAST ONE CHILD, A STROLLER AND A CARRYING DEVICE SUITABLE FOR SUCH A SET**

(30) Priority: 11.09.2017 NL 2019522
(71) Applicant: Maxi Miliaan B.V., 5704 RD Helmond (NL)
(72) Inventor: van Dijk, John Gert Til, 5702 JW Helmond (NL); van Dijk, Robèrt Sjang Josine, 5632 AP Eindhoven (NL)
(74) Representative: Veldman-Dijkers, Cornelia G. C.

(57) **Abstract**

A set for transporting at least one child comprises at least a stroller, a first carrying device and a second carrying device. Each carrying device is detachably connectable to the stroller. A least one of the first and second carrying devices is suitable for carrying a child. At least one of the first and second carrying devices is connectable at at least two different positions on the stroller. The first carrying device comprises at least one first connector to detachably connect the first carrying device to the stroller at at least a first series of different positions. The second carrying device comprises at least one second connector to detachably connect the second carrying device to the stroller at at least a second series of different positions. The second series of positions comprises a limited number of positions of the first series of positions.

## Description

### FIELD OF THE INVENTION

The invention relates to a set for transporting at least one child, which set comprises at least a stroller, a first carrying device and a second carrying device, each carrying device being detachably connectable to the stroller, wherein at least one of the first and second carrying devices is suitable for carrying a child, whilst at least one of the first and second carrying devices is connectable at at least two different positions on the stroller.

The invention also relates to a stroller and a carrying device suitable for such a set.

### BACKGROUND OF THE INVENTION

A set, which is known from DE9414455U1, comprises a stroller provided with two holders each having two pairs of slots. The set also comprises a baby carriage attachment and the sports car attachment each provided with two pins or pickles arranged at a distance from each other and perpendicular to the holders. These bolts engage in the slots for connecting the attachment to the stroller.

Each attachment can be connected to the same slots at a number of different positions on the holders.

Since several combinations of attachments are possible and since the weights of the children also vary, a plurality of slots are provided in the holders. In this way, the attachments can be used according to their arrangement in the direction of travel or opposite to the direction of travel and in accordance with their loading in such a way that the stability of the baby carriage is ensured.

A disadvantage of this set is that the user himself must take care that the attachments are connected to the right combination of slots to ensure the stability of the baby carriage.

### SUMMARY OF THE INVENTION

At least one of the objects of the invention is to provide a set whereby automatically the stability of the stroller is ensured independent on the kind and number of carrying devices connected to the stroller.

This object is accomplished with the set according to the invention in that:
- the first carrying device comprises at least one first connector to detachably connect the first carrying device to the stroller at at least a first series of different positions;
- the second carrying device comprises at least one second connector to detachably connect the second carrying device to the stroller at at least a second series of different positions;
wherein the second series of positions comprises a limited number of positions of the first series of positions irrespective if the first carrying device is mounted on the stroller.

Each series of different positions will be chosen so that if on these positions the respective carrying device is mounted on the stroller, the stroller will be stable irrespective if another carrying device is mounted on the stroller as well. This means if the first carrying device is not mounted on the stroller, the second series of positions for the second carrying device do still comprise a limited number of positions of the first series of positions.

A user cannot connect a carrying device to a position which might lead to an unstable situation. In this manner a user will discover automatically on which positions he can or cannot connect a certain carrying device to the stroller.

At least one but if desired both carrying devices are suitable for carrying a child and are used as child carrying devices. It is however also possible to use a carrying device being suitable for carrying goods like groceries, toys etc.

In the second series of positions a carrying device can be mounted which would lead to an unstable position if mounted at selected positions of the first series of positions which selected positions are therefore not accessible for the second connector.

The second series can comprise one or more positions.

It is of course also possible to use two for example identical carrying devices having the identical connectors, in which case each carrying device can be placed on the same series of different positions, as long as it is not occupied by the other carrying device.

It has to be noted that US3223431A discloses a child carrying unit whereby each chair seat can be connected to the same series of different positions. It will be clear that two chair seats can not be connected to the same positions at the same time. US3223431A does not disclose that the series of positions for the second chair seat comprises a limited number of positions of the series of positions for the first chair seat irrespective if the first chair seat is mounted on the child carrying unit.

It has also to be noted that EP2332806A2 discloses a stroller with maximum six child seats. The child seat can comprise a baby seat or a seat with backrest. Each child seat is provided with a counter part being connectable to a combi-system. Also by EP2332806A2 each child seat can be connected at each position.

An embodiment of the set according to the invention is characterized in that the first and/or second carrying device comprises two connectors located on opposite sides of the carrying device, whilst the stroller is provided with the at least two different positions on two longitudinal sides of the stroller.

By having connectors on both sides of the carrying device a good connection between the carrying device and the stroller is ensured.

Another embodiment of the set according to the invention is characterized in that
- one position of the first series of positions is provided with at least one first position feature;
- another position of the first series of positions is provided with at least one second position feature whilst;
- the first connector is provided with at least one first connector feature,
- the second connector is provided with at least one second connector feature,
wherein the first connector feature is configured for engaging the first and second position features, whilst the second connector feature is configured for engaging only one of the first and second position features.

Only when a combination of a position feature and a connector feature match with each other, the carrying device provided with the connector with the relevant connector feature can be connected at the position with the relevant position feature.

Another embodiment of the set according to the invention is characterized in that the first and second position features on one longitudinal side of the stroller are mirror symmetrical with respect to the first and second position features on the other longitudinal side of the stroller.

In this manner it is relatively easy to provide the connector with a connector feature, so that the carrying device provided with said connector can be connected to the stroller in a forward facing orientation as well as in a rearward facing orientation.

Another embodiment of the set according to the invention is characterized in that at each position of the first and second series of positions a passage is located, wherein the first connector can only be inserted in passages of the first series of different positions, whilst the second connector can only be inserted in passages of the second series of different positions.

By having passages on the stroller instead of for example protrusions, the child seated in the carrying device will have no use impediment and has no risk to get injured.

For a user the insertion of a connector into a passage is a very intuitive action. When the insertion of a connector into a passage is not possible, the user will automatically understand this as an indication that at this position the carrying device cannot be connected to the stroller and he will try another position.

Another embodiment of the set according to the invention is characterized in that
- a passage at one of the positions of the first series of positions is provided with the at least one first position feature;
- a passage at another position of the first series of positions is provided with the at least one second position feature.

Only when a combination of a position feature in the passage and a connector feature match with each other, the carrying device provided with the connector with the relevant connector feature can be inserted into the passage with the relevant position feature.

Another embodiment of the set according to the invention is characterized in that a position feature of one of the passages comprises a ridge extending parallel to the axis of the passage, whilst a connector feature of a connector configured for engaging the respective position feature is provided with a slot for receiving the ridge.

Such ridge can easily be guided into the slot when the connector is inserted into the passage. When a connector is not provided with such a slot, the ridge will prevent said connector to be inserted into the passage.

Another embodiment of the set according to the invention is characterized in that the ridge is located in a corner of a rectangular cross section of the passage.

Such a rectangular cross section automatically orientates the connector. The ridge can easily be applied in a corner of the rectangular cross section and can easily be seen by the adult when inserting the connector in a slot.

Another embodiment of the set according to the invention is characterized in that a position feature of one of the passages comprises two ridges extending parallel to the axis of the passage, whilst a connector feature of a connector configured for engaging the respective position feature is provided with two slots for receiving the ridges.

Such ridges can easily be guided into the slots when the connector is inserted into the passage. When a connector is not provided with such slots, the ridge will prevent said connector to be inserted into the passage.

Another embodiment of the set according to the invention is characterized in that the ridges are located in two corners of a rectangular cross section of the passage, which corners are located diagonal opposite to each other.

Due to such diagonal orientation, the connector attached to the carrying device can easily be inserted into the passage, with the carrying device in a forward facing direction as well as in a rearward facing direction. In such case both ridges and both slots must be identical in shape and size in cross section.

Another embodiment of the set according to the invention is characterized in that a position feature of one of the passages comprises at least one slot provided in a bottom wall of the passage, whilst a connector feature of a connector configured for engaging the respective position feature is provided with at least one extension configured for entering the at least one slot.

Such a bottom wall can be used as a stop for the movement of the connector into the passage. If the connector is provided with an extension, the extension can be inserted into the slot in the bottom wall so that the connector will obtain its correct position in the passage. If no extension is present the connector can be inserted and the end of the connector will be located either at a distance of the bottom or rest against the bottom. In case that the connector has an extension which is not configured for engaging the respective slot, the connector can not be fully inserted into the passage, providing a indication to the user that the connector should be inserted into another passage.

Another embodiment of the set according to the invention is characterized in that different passages comprises slots with different length and/or a different number of slots, whilst a connector feature of a connector configured for engaging the respective position feature is provided with a corresponding number of extensions each having the corresponding length for entering the respective slots.

In such a manner different passages can easily be made suitable for connectors with different extensions. For example, a long slot can receive a small as well as a wide extension and even a number of aligned small extensions having a total length equal or smaller than the length of the slot. A short slot can only receive a small extension.

Another embodiment of the set according to the invention is characterized in that a position feature of a passage also comprises a latch feature, whilst a connector feature of a connector configured for engaging the respective position feature comprises a connector latch feature for securely locking the carrying device to the stroller.

By locking the carrying device to the stroller accidental release of the carrying device is easily prevented.

Another embodiment of the set according to the invention is characterized in that the position feature of different passages comprises different latch features, each being suitable for cooperating with a connector latch feature of a connector feature of a connector configured for engaging the respective position feature.

By having different ways for locking the connector in a passage, a further automatic check is provided to the user. As long as a connector is not automatically locked into the passage when fully inserted, this is an indication to the user that the wrong passage is being used.

Another embodiment of the set according to the invention is characterized in that the connector is detachably connected to carrying device.

In this manner each carrying device can be provided with the correct connector. Preferably the connector at the side of the carrying device is provided with means to prevent connection to a carrying device which should not be provided with the specific connector.

Another embodiment of the set according to the invention is characterized in that the carrying device comprises a car child seat, a child seat, a pram, a toddler board or a storage box.

Depending on the ages and number of the children the user wants to transport by means of the stroller, the user selects the desired carrying device or combination of carrying devices. The user can also use for example one carrying device for carrying a child and one carrying device like a storage box for carrying for example groceries.

Another embodiment of the set according to the invention is characterized in that the first series of positions comprises a limited number of positions of the second series of positions.

In the first series of positions a carrying devices can be mounted which would lead to an unstable position if mounted at selected positions of the second series of positions which selected positions are therefore not accessible for the first connector.

Another embodiment of the set according to the invention is characterized in that at least the first or second carrying device can be detachably connected in a forward facing and rearward facing orientation to the stroller.

In this manner depending on the wishes of the child and the user, the child can be looking in a rearward facing direction to the user pushing or pulling the stroller or in a forward facing direction away from the user and facing the rest of the world.

Another embodiment of the set according to the invention is characterized in that the set comprises at least a third carrying device comprising at least one third connector to detachably connect the third carrying device to the stroller at at least a third series of different positions, wherein the third series of positions comprises a limited number of positions of the first and/or second series of positions.

In this manner, each carrying device can have its own connector and own series of positions at which it can be connected to the stroller.

### BRIEF DESCRIPTION OF THE DRAWINGS

The set according to the invention will further be explained with reference to the drawings, wherein,
figure 1 is a side view of a stroller according to the invention,
figure 2 is a top view of a frame of the stroller as shown in figure 1,
figures 3A, 3B and 3C are respective a perspective view, inside side view and outside side view of a part of the frame as shown in figure 2,
figures 4A, 4B and 4C are schematic views of the part of the frame as shown in figure 3A-3C showing respectively an inside side view, a top view and different latch features at different positions,
figure 5 is a top view of a first passage of the frame as shown in figure 2,
figure 6 is a top view of a second passage of the frame as shown in figure 2,
figure 7 is a top view of a third passage of the frame as shown in figure 2,
figure 8 is a top view of a fourth passage of the frame as shown in figure 2,
figure 9 is a top view of a fifth passage of the frame as shown in figure 2,
figure 10A-D are different views of a first connector,
figure 11A-D are different views of a second connector,
figure 12A-D are different views of a third connector,
figure 13A-D are different views of a fourth connector,
figure 14A-D are different views of a fifth connector,
figure 15 is a side view of a child seat provided with the first connector as shown in figure 10A-D,
figure 16 is a side view of a pram provided with the second connector as shown in figure 11A-D,
figure 17 is a side view of a car seat provided with the third connector as shown in figure 12A-D,
figure 18 is a side view of a toddler board provided with the fourth connector as shown in figure 13A-D,
figure 19 is a side view of a pram provided with the fifth connector as shown in figure 14A-D,
figure 20 is a schema of different combinations of passages and connectors connected to different carrying devices,
figure 21 is a side view of a stroller with a pram at the fourth passage and a forward facing child seat at the second position,
figure 22 is a side view of a stroller with a rearward facing child seat at the fifth position and a forward facing child seat at the first position,
figure 23 is a side view of a stroller with a rearward facing child seat at the third position,
figure 24, is a side view of a stroller with a pram high at the third position,
figure 25 is a side view of a stroller with a child seat as shown in fig 15 and a car seat as shown in figure 17 at the first position and fifth position, respectively,
figure 26 is a side view of a stroller with a child seat as shown in fig 15 and a toddler board as shown in figure 18 at the first position and fourth position, respectively.

In the drawings, like reference numerals refer to like elements.

### DESCRIPTION OF PREFERRED EMBODIMENTS

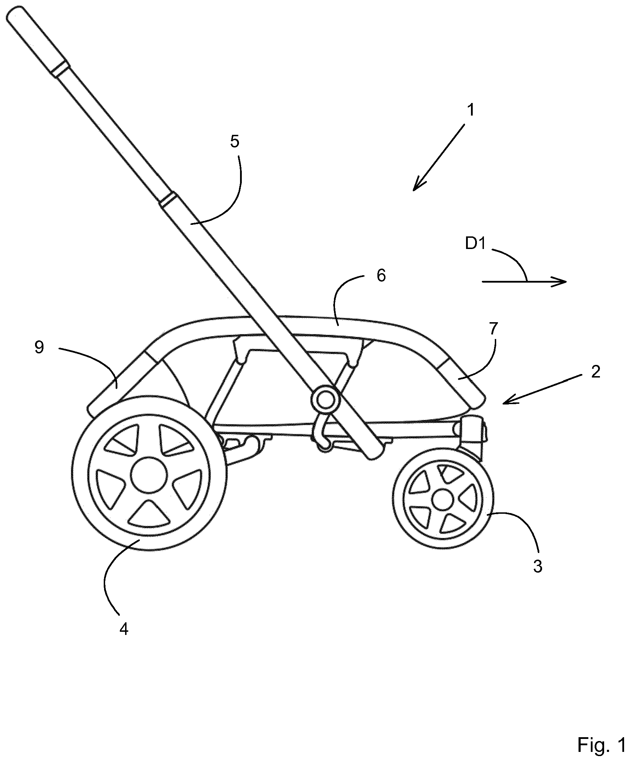

Figure 1 shows a stroller 1 of a set 100 for transporting at least one child according to the invention. The stroller 1 comprises a foldable frame 2, front wheels 3 and rear wheels 4 supporting the frame 2 and a push bar 5 for pushing the stroller 1 in a forward direction indicated by arrow D1 and for controlling other movements of the stroller 1. The frame 2 comprises two spaced apart support bars 6 extending parallel to the forward direction indicated by arrow D1.

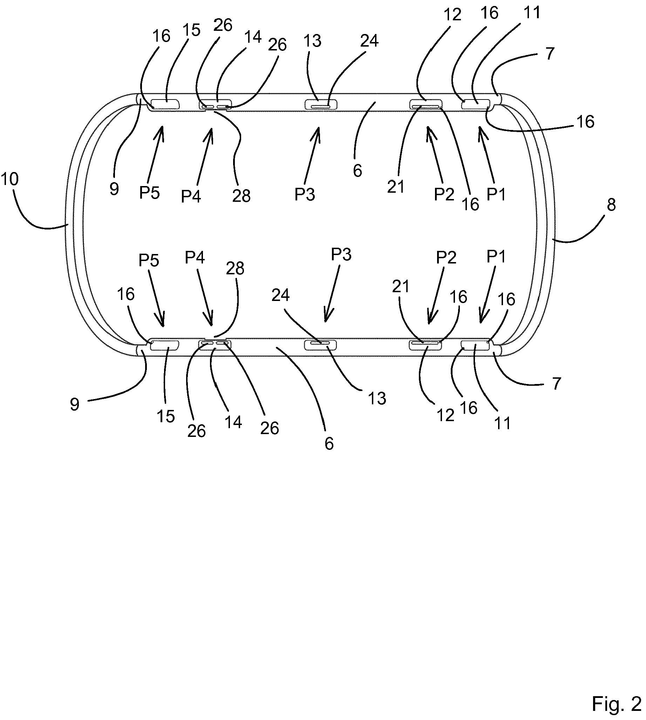

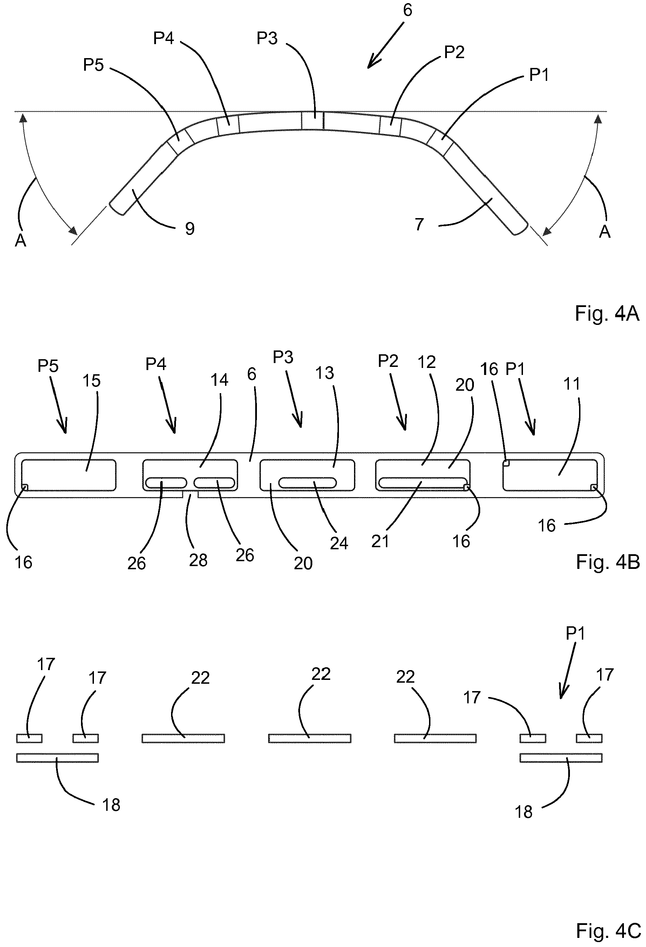

As can be seen in the figures 2-9, the support bars 6 are connected to each other at a front end 7 by a curved bar 8 and at a rear end 9 by a curved bar 10. At the front and rear end 7, 9 the support bars 6 extend downward and enclose an angle A with the horizontal being less than 180 degrees for example in a range between 1 and 45 degrees for example 35 degrees.

Each support bar 6 comprises five positions P1-P5 onto which a carrying device can be connected as will be explained here below.

At each position P1-P5 a passage 11, 12, 13, 14, 15 is located. Each passage 11, 12, 13, 14, 15 extends perpendicular to the support bar 6 and has a similar rectangular main cross section.

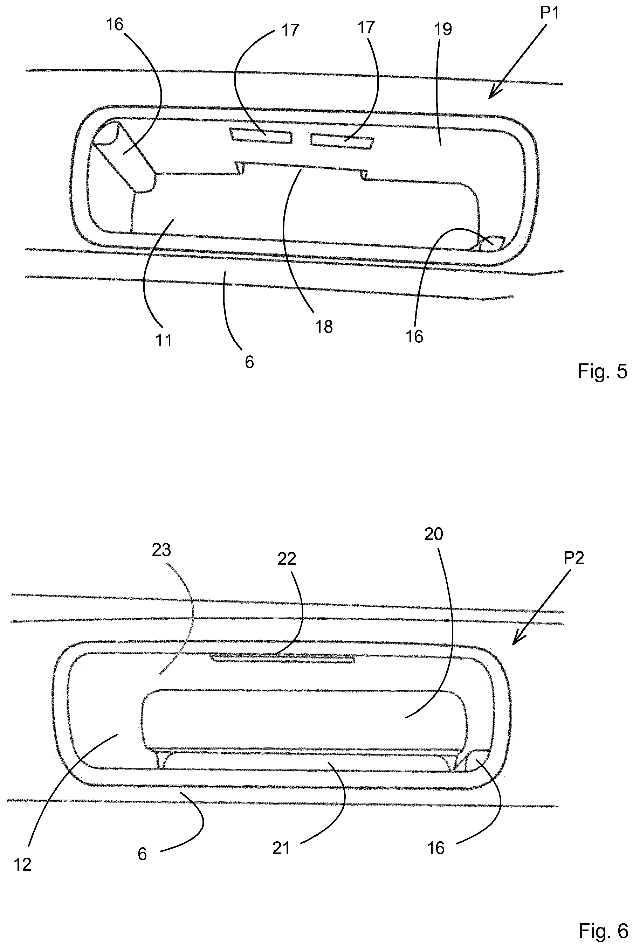

As can be seen in figure 5, the passage 11 at position P1 is provided with a first position feature comprising two ridges 16 extending parallel to the axis of the passage 11. The ridges 16 are located in two corners of the rectangular cross section of the passage 11, which right lower and left upper corners are located diagonal opposite to each other.

The passage 11 is open at both ends and does not comprise a bottom wall.

The first position feature of the passage 11 also comprises a first latch feature. The first latch feature comprises two relatively short slots 17 located next to each other and a relatively long slot 18. The slots 17, 18 are located in a longitudinal side wall 19 bounding the passage 11. The relatively long slot 18 is located below the two relatively short slots 17 at a distance thereof, whereby the two relatively short slots 17 and the relatively long slot 18 extend parallel to each other.

As can be seen in figure 6, the passage 12 at position P2 is provided with a second position feature comprising a same ridge 16 as the first position feature. The ridge 16 is located in the right below corner of the rectangular cross section of the passage 12.

The passage 12 is closed at its bottom by a bottom wall 20. The second position feature comprises a relatively long slot 21 located in the bottom wall 20.

The second position feature of the passage 12 also comprises a second latch feature. The second latch feature comprises a relatively long slot 22 in a longitudinal side wall 23 bounding the passage 12. The relatively long slot 22 is located at the same height in the passage 12 as the relatively short slots 17 in the passage 11. The relatively long slot 22 in passage 12 has the same length as the relatively long slot 18 in the passage 11.

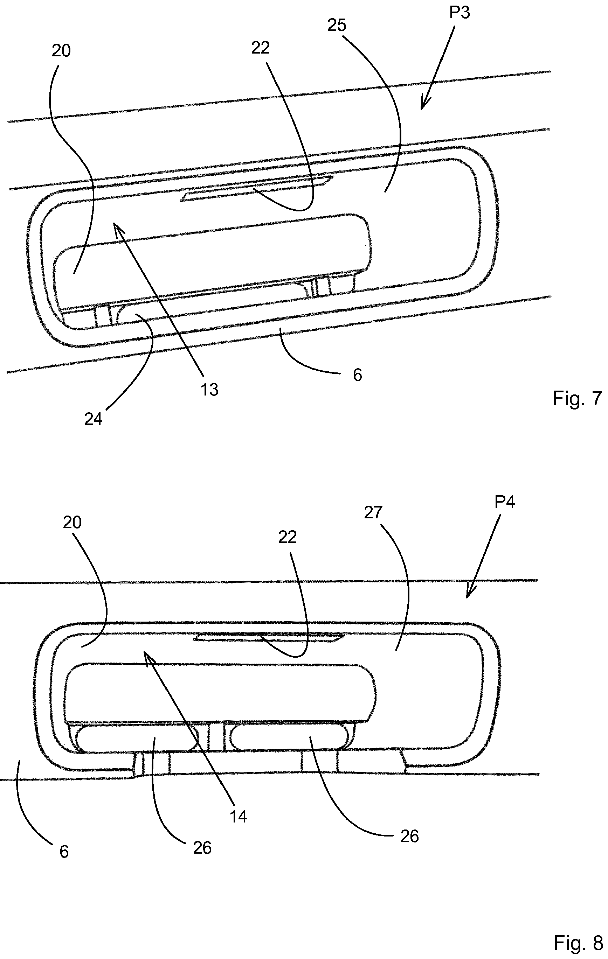

As can be seen in figure 7, the passage 13 at position P3 is closed at its bottom by a bottom wall 20. The passage 13 is provided with a third position feature comprising a slot 24 located in the bottom wall 20. The length of the slot 24 is slightly shorter than the length of the slot 21 of the second position feature.

The third position feature of the passage 13 also comprises a third latch feature. The third latch feature comprises the same relatively long slot 22 in a longitudinal side wall 25 bounding the passage 13. The relatively long slot 22 is identical to the slot 22 in the second passage 12.

As can be seen in figure 8, the passage 14 at position P4 is closed at its bottom by a bottom wall 20. The passage 14 is provided with a fourth position feature comprising two relatively short slots 26 located in the bottom wall 20. The slots 26 are spaced apart and aligned. The length of each slot 26 is shorter than the length of the slots 21, 24 of the second and third position feature.

The fourth position feature of the passage 14 also comprises a fourth latch feature. The fourth latch feature comprises the same relatively long slot 22 in a longitudinal side wall 27 bounding the passage 14. The relatively long slot 22 is identical to the slot 22 in the second and third passage 12, 13.

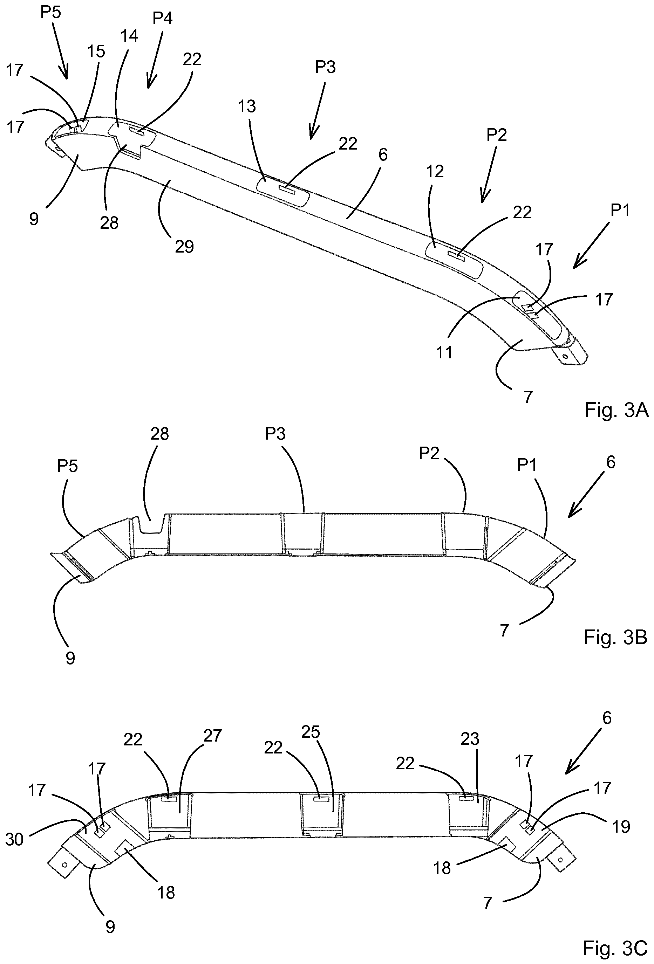

As can be best seen in figures 3A en 3B the fourth position feature of the passage 14 also comprises an opening 28 in a side wall 29 of the support bar 6.

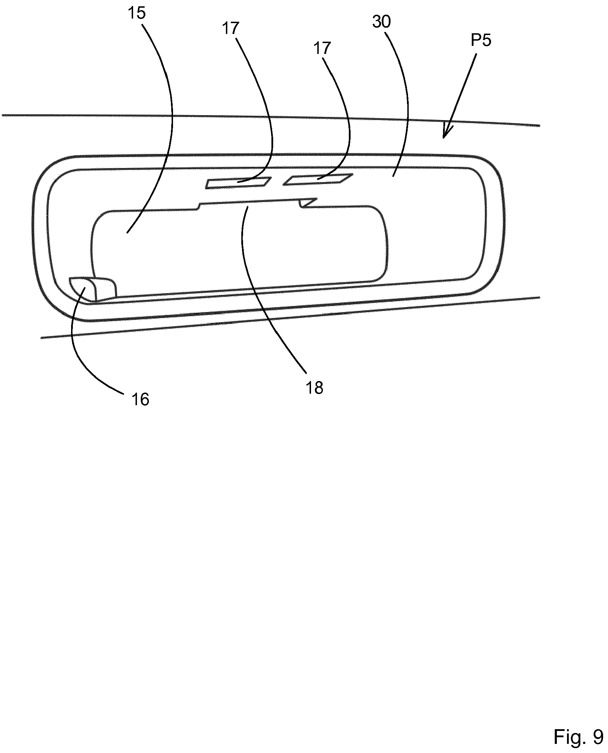

As can be seen in figure 9, the passage 15 at position P5 is provided with a fifth position feature comprising one ridge 16 extending parallel to the axis of the passage 15. The ridge 16 is located in the left below corner of the rectangular cross section.

The passage 15 is open at both ends and does not comprise a bottom wall.

The fifth position feature of the passage 15 also comprises a fifth latch feature. The fifth latch feature comprises two relatively short slots 17 located next to each other and a relatively long slot 18. The slots 17, 18 are located in a longitudinal side wall 30 bounding the passage 15. The slots 17, 18 are similar to the slots in the first passage 11.

The first till fifth position features on one support bar 6 of the stroller 1 are mirror symmetrical with respect to the first till fifth position features on the other support bar 6 of the stroller 1.

The stroller 1 is suitable for supporting one or two carrying devices like amongst others a car child seat, a child seat, a pram or a toddler board, as will be explained here below. Each carrying device will be provided with its own connector, whereby each connector can be detachable connected at one or more predefined positions P1-P5. Firstly, five different connectors 31, 32, 33, 34 and 35 will be described with reference to the respective figures.

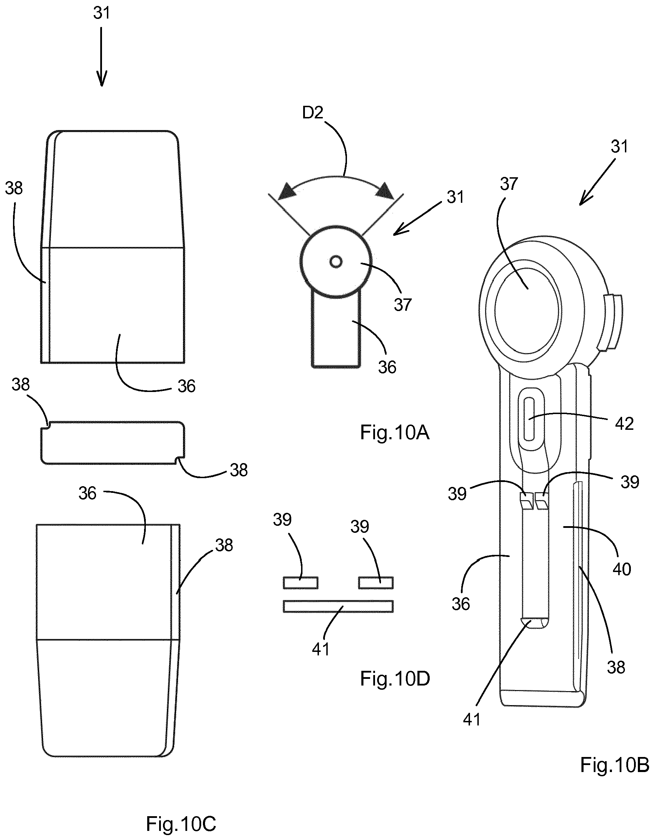

Figure 10A-10D show respectively a schematic view (figure 10A), a perspective view (figure 10B), a rear view, cross section, front view (figure 10C) and a schematic detail (figure 10D) of the first connector 31 of the set according to the invention.

The first connector 31 is provided with an elongated body 36 provided at an end with a rotating disk 37 which can be connected to a carrying device. By rotating the rotating disk 37 in the direction of the arrow D2, the orientation of the elongated body 36 with respect to the carrying device can be amended as desired.

The elongated body 36 has a rectangular cross section. The elongated body 36 is provided with a first connector feature comprising two elongated slots 38 located in two corners of a rectangular cross section, which corners are located diagonal opposite to each other. The dimension of the elongated body 36 and the size and location of the slots 38 are so that the first connector 31 can be inserted in each of the passages 11-15.

The first connector feature of the connector 31 also comprises a first connector latch feature. The first connector latch feature comprises two spaced apart cams 39 located on a side wall 40 of the elongated body 36. The cams 39 are configured for engaging the slots 17 in the walls 19, 30 of the passages 11, 15 in the first and fifth position P1, P5.

The first connector latch feature also comprises a cam 41 located at a side of the cams 39 remote of the rotating disk 37 on a side wall 40 of the elongated body 36. The cam 41 is configured for engaging the slot 18 in the walls 19, 30 of the passages 11 and 15.

When the cam 41 cooperates with the slot 18, the rotating disk 37 of the connector 31 will be located at a relatively short distance from the support bar 6.

The cam 41 is also configured for engaging the slot 22 in the walls 23, 25, 27 of the passages 12, 13 and 14. The end of the elongated body 36 will hereby near to or rest on the bottom wall 20. When the cam 41 cooperates with the slot 22, the rotating disk 37 of the connector 31 will be located at a relatively large distance from the support bar 6. The choice of two different positions (short and large distance from the support bar 6) is linked to stability reason.

The cams 39, 41 can be disconnected from the respective slots 17, 18, 22 by pressing on button 42.

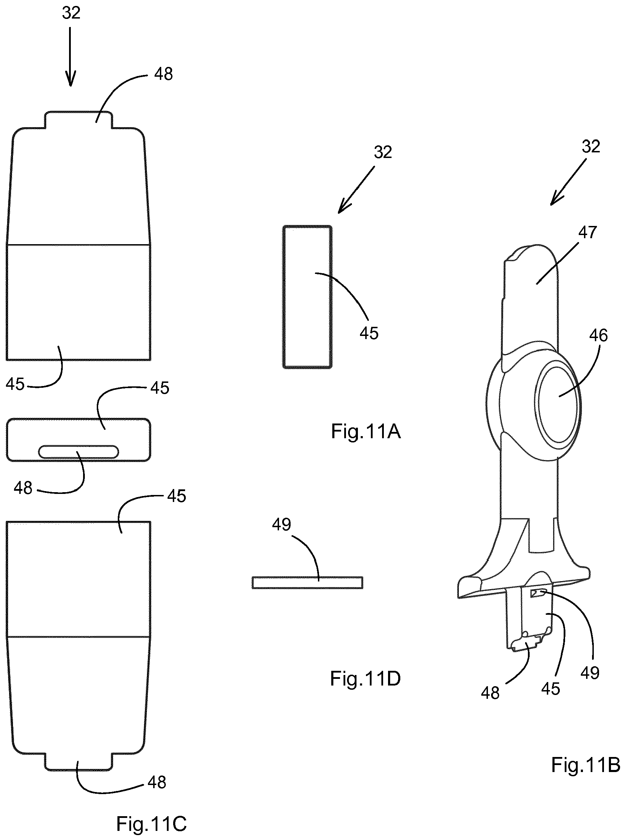

Figure 11A-11D show respectively a schematic view (figure 11A), a perspective view (figure 11B), a rear view, cross section, front view (figure 11C) and a schematic detail (figure 11D) of the second connector 32 of the set according to the invention.

The second connector 32 is provided with an elongated body 45 provided near with a button 46 and a coupling part 47 being connected to a carrying device. The coupling part 47 can also be integrated into the carrying device.

The elongated body 45 has a rectangular cross section. The elongated body 45 is provided with a second connector feature comprising one extension 48 configured for entering slot 24 of the third position feature at position P3. The dimension of the elongated body 45 and the size and location of extension 48 are so that the second connector 32 can be inserted only in passage 13 at the third position P3.

The second connector feature of the connector 32 also comprises a second connector latch feature. The second connector latch feature comprise a cam 49 configured for engaging slot 22 in the wall 25 of passage 13 at the third position P3.

The cam 49 can be disconnected from the slot 22 by pressing on button 46.

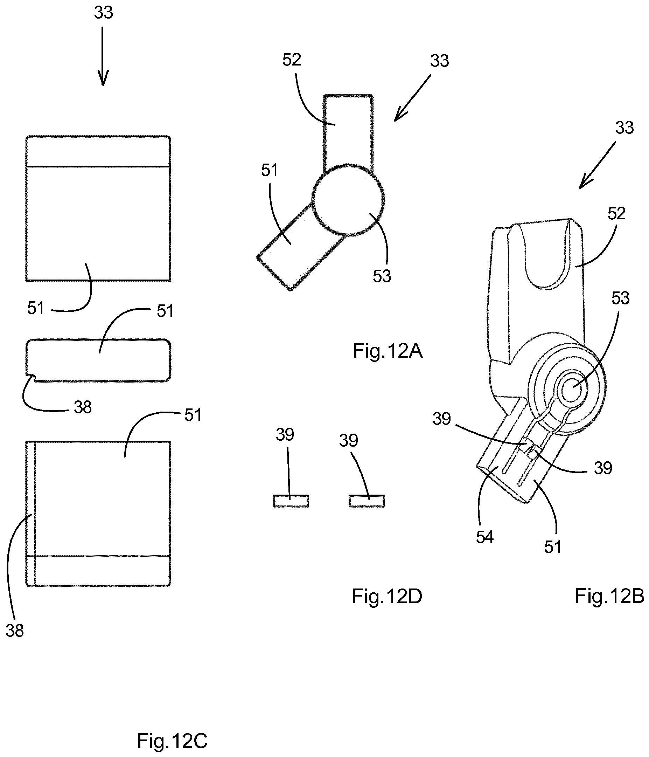

Figure 12A-12D show respectively a schematic view (figure 12A), a perspective view (figure 12B), a rear view, cross section, front view (figure 12C) and a schematic detail (figure 12D) of the third connector 33 of the set according to the invention.

The third connector 33 is provided with an elongated body 51, a coupling device 52 and a button 53 located between the elongated body 51 and the coupling device 52. To the coupling device 52 a carrying device can be detachable coupled. A main axis of the coupling device 52 extends under an angle of (much) less than 180 degrees with a main axis of the elongated body 51.

The elongated body 51 has a rectangular cross section. The elongated body 51 is provided with a third connector feature comprising one elongated slot 38 located in a corner of a rectangular cross section. The dimension of the elongated body 51, the angle between the coupling device 52 and the elongated body 51 and the size and location of the slot 38 are so that the third connector 33 can be inserted only in passage 15. Theoretically, the elongated body 51 could be inserted in passage 12 as well, but due to the angle with the coupling device 52, the carrying device connected thereto would be in a position in which no child can be sit in the carrying device.

The third connector feature of the connector 33 also comprises a third connector latch feature. The third connector latch feature comprises two spaced apart cams 39 located on a side wall 54 of the elongated body 51. The cams 39 are configured for engaging the slots 17 in the wall 30 of the passage 15. Therefore, although the third connector 33 can be inserted into the passages 12, 13 and 14, it can not be locked into said passages 12, 13, 14. Furthermore, the length of the elongated body 51 can be such that it will hit the bottom wall 20 of the passages 12, 13, 14 before the elongated body 51 is fully inserted into the passages 12, 13, 14 which will be another warning for the user that another passage should be chosen for mounting this connector 33. The cams 39 can be disconnected from the slots 17 by pressing on button 53.

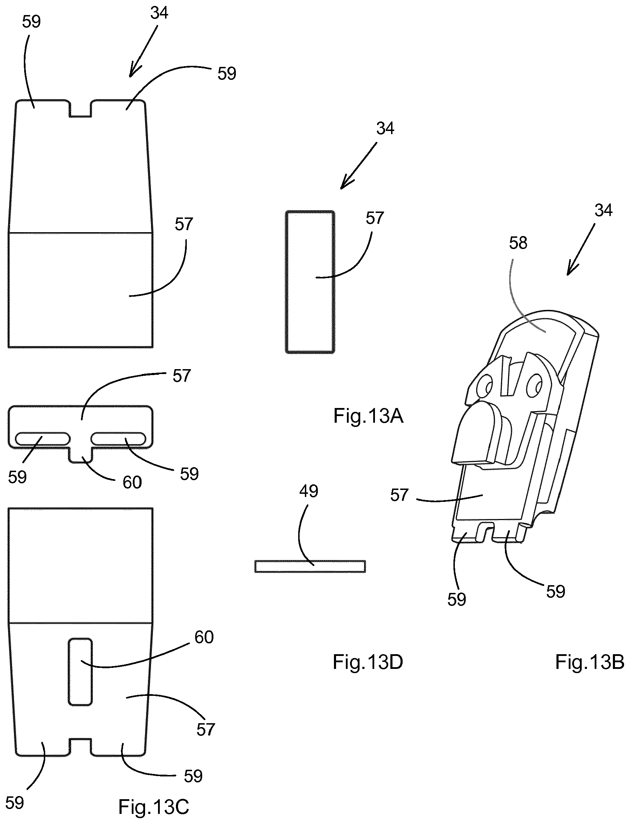

Figure 13A-13D show respectively a schematic view (figure 13A), a perspective view (figure 13B), a rear view, cross section, front view (figure 13C) and a schematic detail (figure 13D) of the fourth connector 34 of the set according to the invention.

The fourth connector 34 is provided with an elongated body 57 and a coupling part 58. To the coupling device 58 a carrying device can be detachably coupled.

The elongated body 57 mainly has a rectangular cross section. The elongated body 57 is provided with a fourth connector feature comprising two extensions 59 configured for entering slots 26 of the fourth position feature at position P4. The fourth connector feature also comprises a ridge 60 extending in the longitudinal direction of the elongated body 57. The ridge 60 is configured for engaging the opening 28 in a side wall 29 of the support bar 6.

The dimension of the elongated body 57 and the size and location of the extensions 59 and ridge 60 are so that the fourth connector 34 can be inserted only in passage 14 at the fourth position P4.

The fourth connector feature of the connector 34 also comprises a fourth connector latch feature. The fourth connector latch feature comprise a cam 49 configured for engaging slot 22 in the wall 27 of passage 14 at the fourth position P4. The cam 49 is not visible in figure 13B since it is located on the rear side of the connector 34. The cam 49 can be disconnected from the slot 22 by pressing a button also not visible and also located on the rear side of the connector 34.

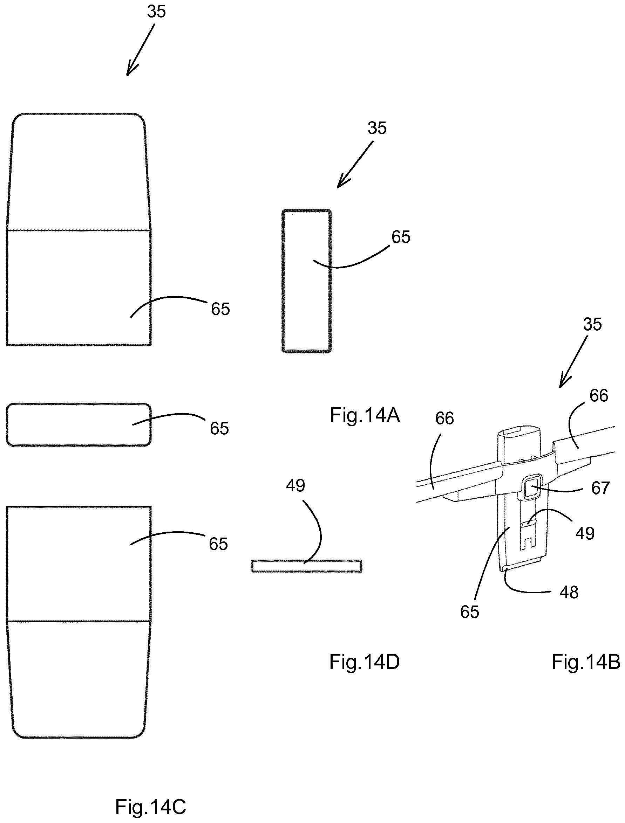

Figure 14A-14D show respectively a schematic view (figure 14A), a perspective view (figure 14B), a rear view, cross section, front view (figure 14C) and a schematic detail (figure 14D) of the fifth connector 35 of the set according to the invention.

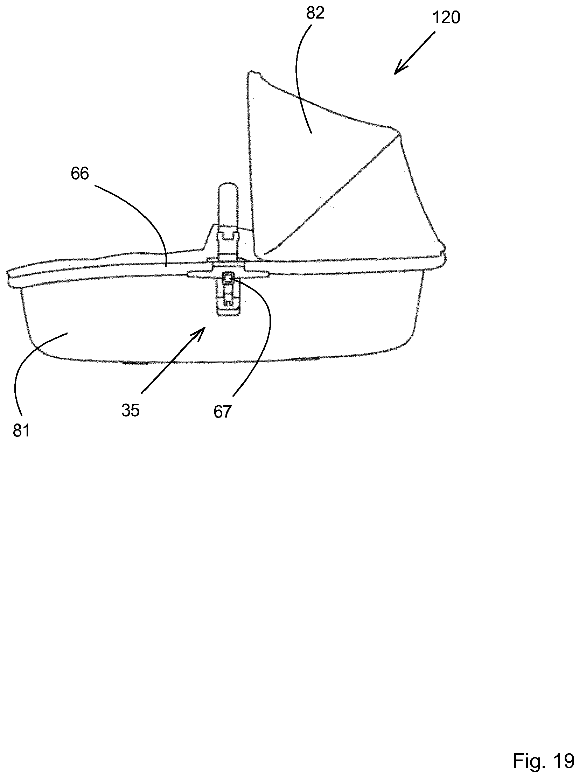

The fifth connector 35 is provided with an elongated body 65 which can be connected at one end to a ring shaped frame element 66 of a carrying device, like a pram (see figure 19).

The elongated body 65 has a complete rectangular cross section. The elongated body 65 is provided with a fifth connector feature in that it does not comprise slots 38. The dimension of the elongated body 65 is so that the fifth connector 35 can be inserted only in the passages 13 and 14 at the third and fourth position P3, P4.

The fifth connector feature of the connector 35 also comprises a fifth connector latch feature. The fifth connector latch feature comprise a cam 49 configured for engaging slot 22 in the wall 25, 27 of passage 13, 14 at the third and fourth position P3, P4. The cam 49 can be disconnected from the slot 22 by pressing on button 67.

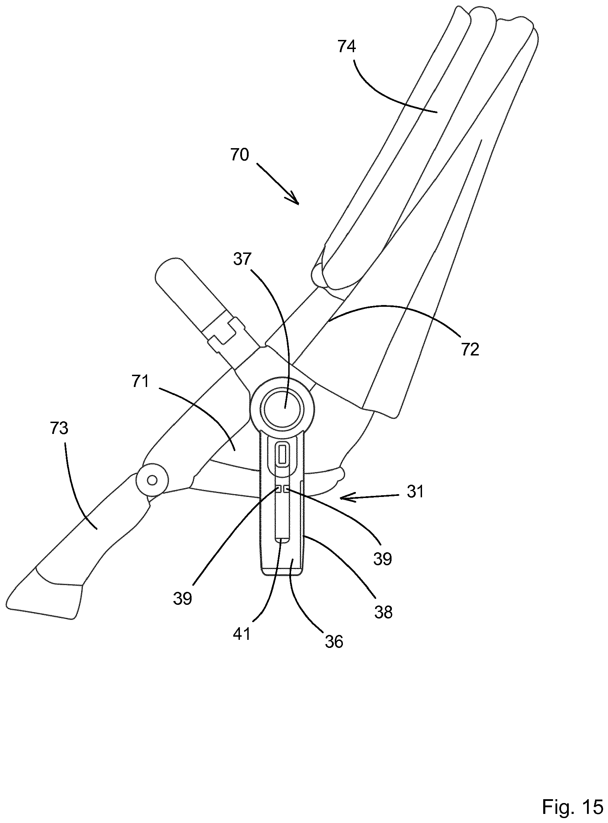

Figure 15 shows a child seat 70 provided on both sides with first connectors 31.

The child seat 70 comprises a seating portion 71 a back rest portion 72, a leg rest portion 73 pivotably connected to the seat portion 71 at a side remote of the backrest portion 72, and a sun shielding element 74 connected to the backrest portion 72 at a side remote of the seat portion 71. Such a child seat 70 is known as such and will not further be explained. By means of the first connectors 31 the child seat 70 can be connected at each of the positions P1-P5 both in a forward facing direction as well as in a rearward facing direction to the stroller 1. This is shown in figure 19 at I and II.

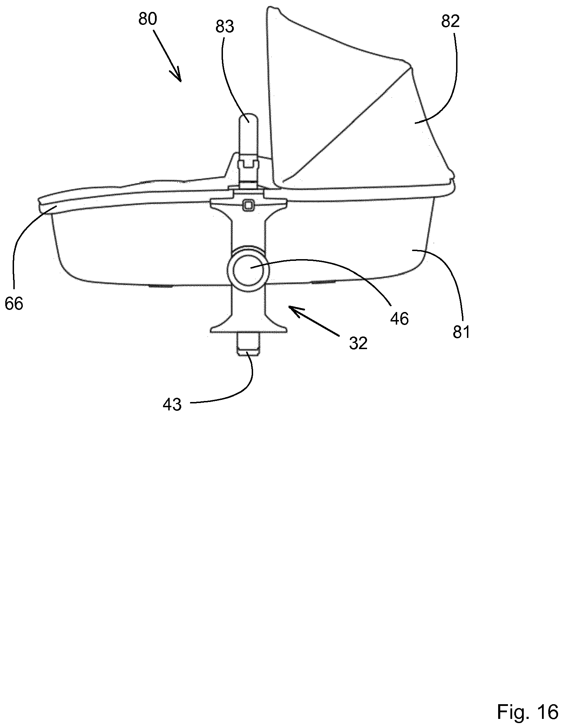

Figure 16 shows a pram 80 provided on both sides with second connectors 32.

The pram 80 comprises a shell 81 for holding a child, a sunroof 82 and a handle 83. The second connectors 32 are connected to a ring shape frame element 66 of the shell 81.

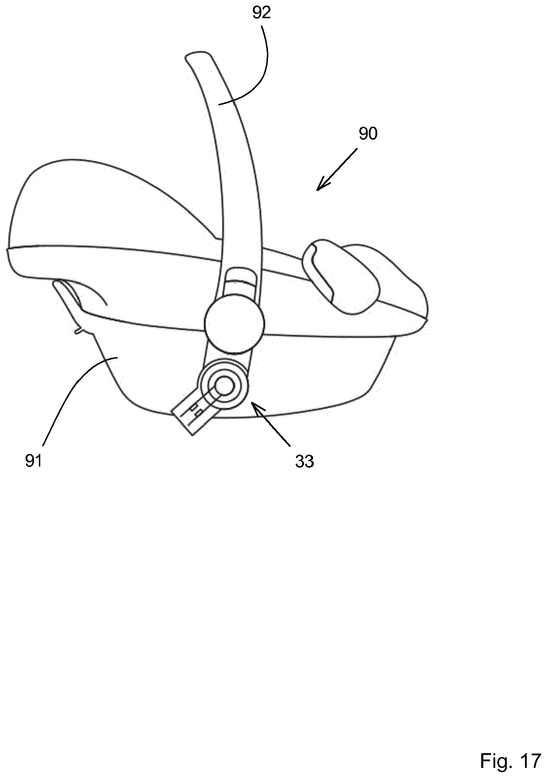

Figure 17 shows a car seat 90 provided on both sides with second connectors 33. The car seat 90 being suitable for relatively young children up to 10 kilogram comprises a shell 91 for holding a child and a handle 92.

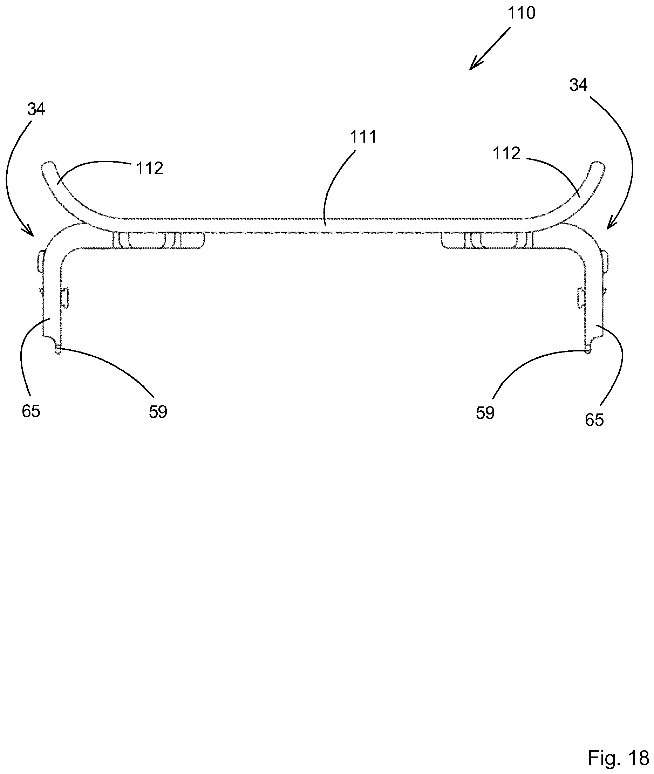

Figure 18 shows a side view of a toddler board 110 provided on both sides with fourth connectors 34.

The toddler board 110 comprises a plate shaped element 111 with upwardly curved parts 112. In the curved parts 112 openings 113 are provided. A toddler can sit on the plate shaped element 111 whereby he can put his hands through the openings 113 for keeping himself stable.

Figure 19 shows a pram 120 provided on both sides with fifth connectors 35.

Like pram 80, the pram 120 comprises a shell 81 for holding a child, a sunroof 82 and a handle 83. The fifth connectors 35 are connected to a ring shape frame element 66 of the shell 81.

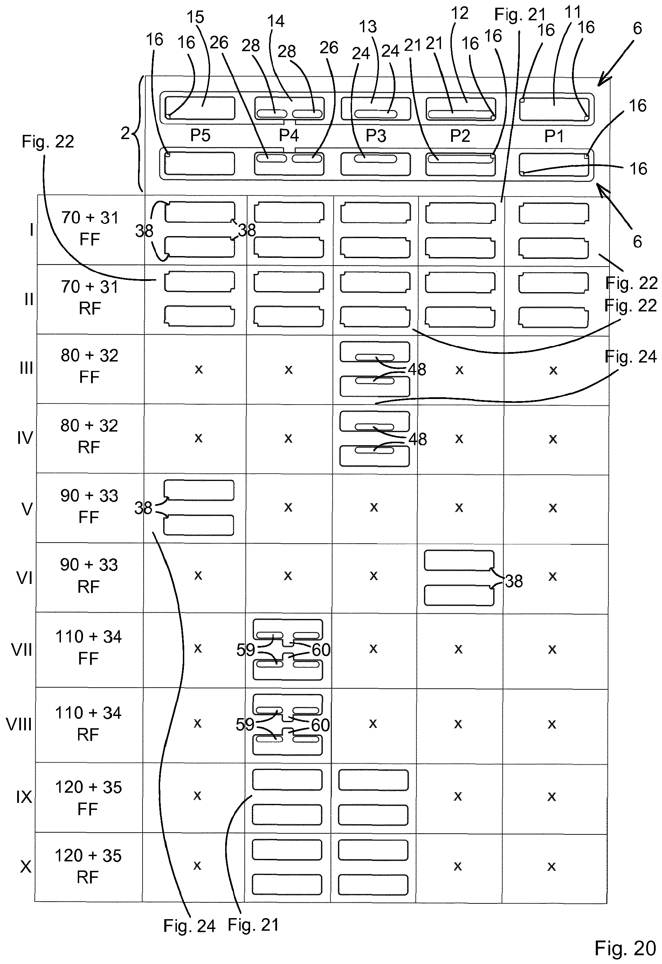

Figure 20 shows a scheme showing the different combinations at the different positions P1-P5 with the different connectors 31-35. Due to the different position features and connector features, the connector 31 can be coupled at all positions P1-P5 since the slots 38 will engage with the ridges 16, if present in the passages and the cams 39 will engage with both the slots 17 and 22. All connectors 31-35 can always be coupled in a forward facing direction as well as in a rearward facing direction to the stroller 1.

The connector 32 can be only coupled to the stroller 1 at position P3 since only at that position the extension 48 will engage with slot 24.

The connector 33 can be only coupled to the stroller 1 at position P2 and P5 since only at that position the single slots 38 will engage with the single ridges 16.

The connector 34 can be only coupled to the stroller 1 at position P4 since only at that position the ridge 60 will be able to be inserted into the opening 28 in the side wall 29 of the support bar 6.

The connector 35 can be only coupled to the stroller 1 at position P3 and P4 since only at those positions, there are no ridges 16 blocking the entrance of the fully rectangular cross section of the connector 35.

The positions P1-P5 form a first series of positions, position P3 forms a second series of positions, position P5 forms a third series of positions, position P4 forms a fourth series of positions and the positions P3 and P4 forms a fifth series of positions. The second, third, fourth and fifth series of positions comprises a limited number of positions of the first series of positions.

The fourth series of positions comprises a limited number of positions of the fifth series of positions.

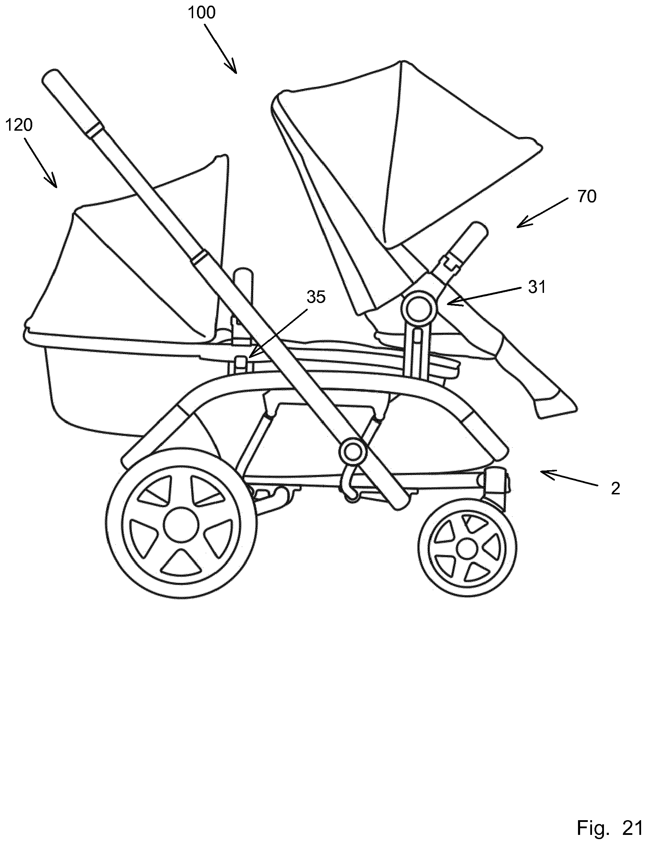

Figure 21 shows a set 100 according to the invention comprising a stroller 1, a forward facing child seat 70 connected with connector 31 to the stroller 1 at position P2 and a pram 120 connected with connector 35 to the stroller 1 at position P4.

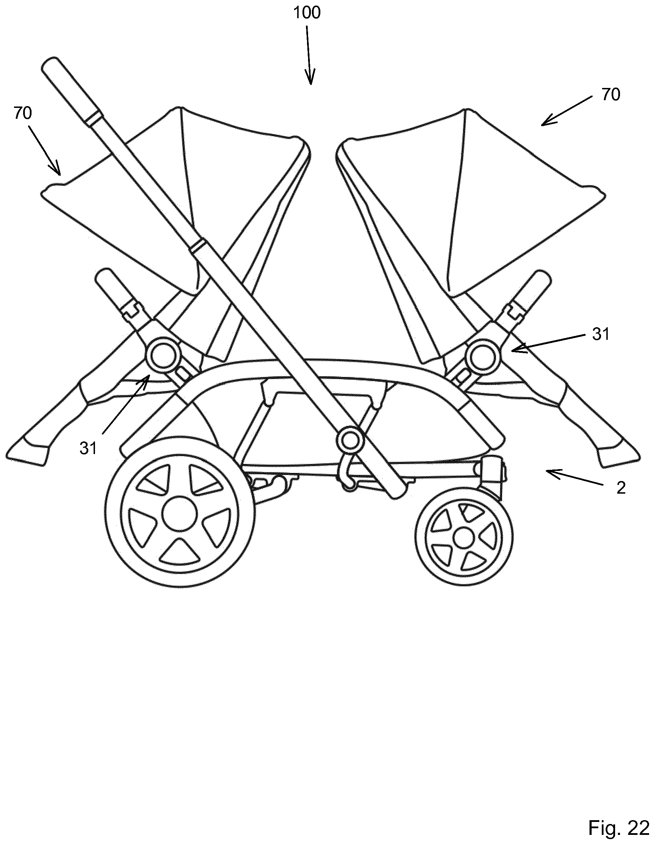

Figure 22 shows a set 100 according to the invention comprising a stroller 1, a forward facing child seat 70 connected with connector 31 to the stroller 1 at position P1 and rearward facing child seat 70 connected with connector 31 to the stroller 1 at position P5.

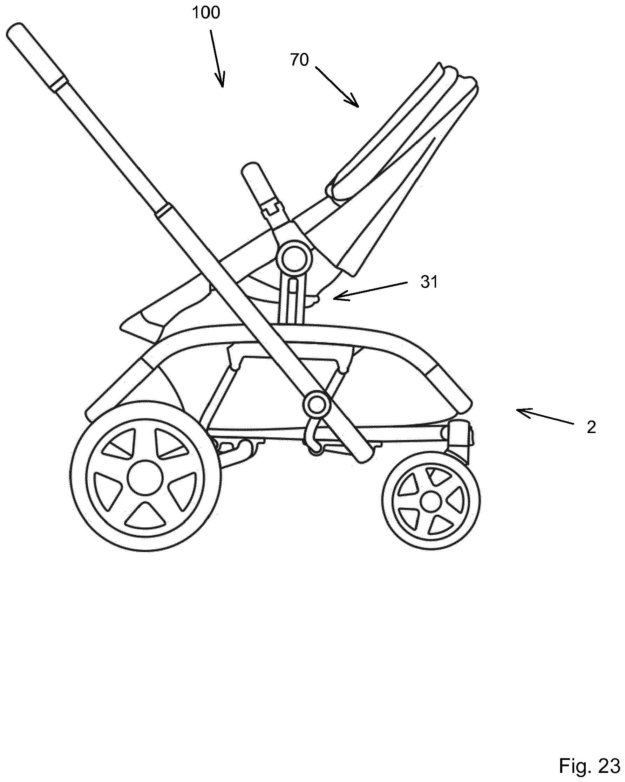

Figure 23 shows a set 100 according to the invention comprising a stroller 1, a rearward facing child seat 70 connected with connectors 31 to the stroller 1 at position P3.

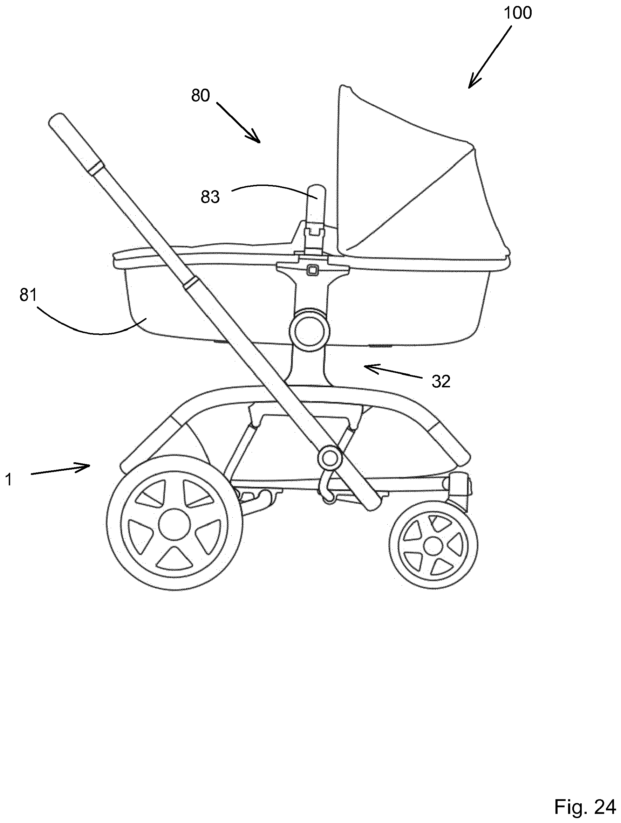

Figure 24 shows a set 100 according to the invention comprising a stroller 1 with a pram 80 connected with connectors 32 to the stroller 1 at position P3.

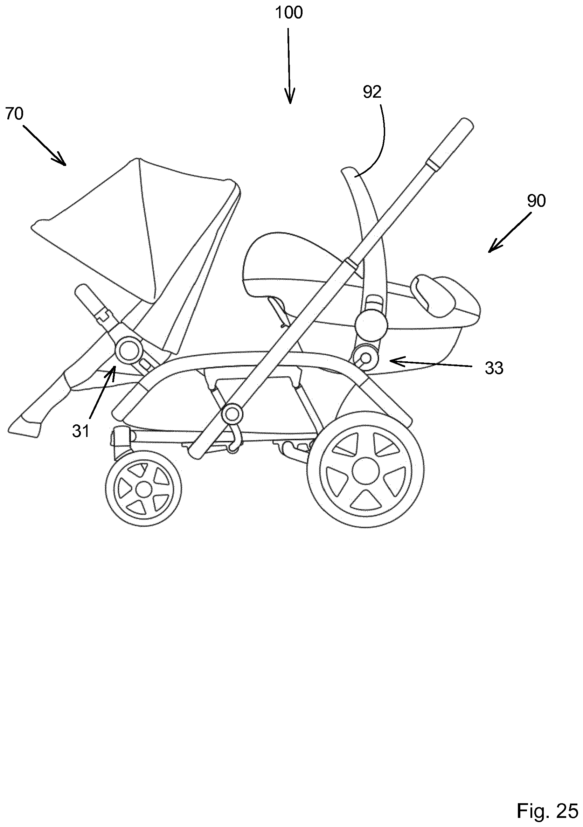

Figure 25 shows a set 100 according to the invention comprising a stroller 1, a forward facing child seat 70 and a rearward facing car child seat 90 connected with connectors 31 and 33 respectively to the stroller 1 at position Pi and P5 respectively.

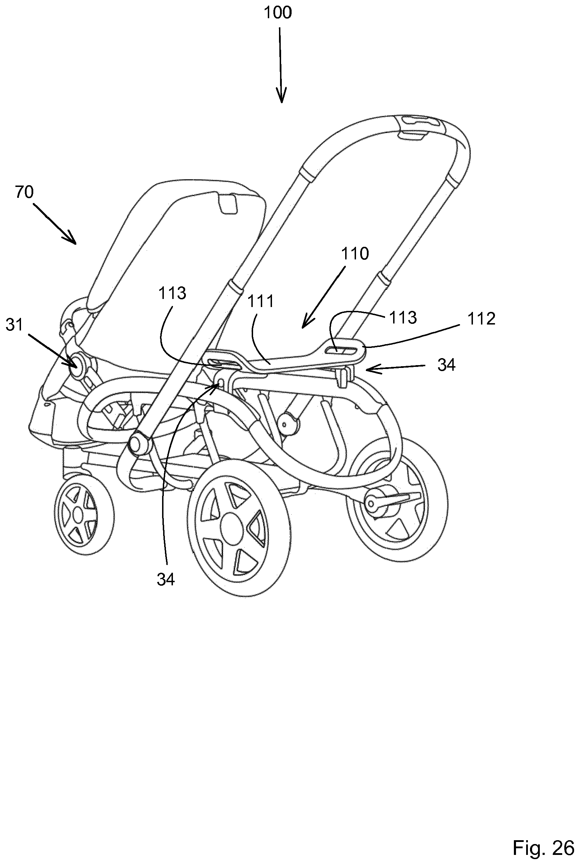

Figure 26 shows a set 100 according to the invention comprising a stroller 1, a forward facing child seat 70 and a toddler board 110 connected with connectors 31 and 34 respectively to the stroller 1 at position P1 and P4 respectively.

By the above mentioned embodiments the connectors were attached to child carrying devices. It is however also possible to attach the connectors to a carrying device like a storage box for carrying goods. Depending on the required stability a certain connector will be chosen. The connectors can also be attached to other accessories.

It is also possible to provide the connectors and the cooperating parts on the strollers with other kind of cams, ridges, slots etc.

The number of positions and/or connectors can be larger or smaller than the number as shown in the drawings.

### LIST OF REFERENCE SIGNS

- 1: stroller
- 2: frame
- 3: front wheels
- 4: rear wheels
- 5: push bar
- 6: support bar
- 7: front end
- 8: curved bar
- 9: rear end
- 10: curved bar
- 11: passage
- 12: passage
- 13: passage
- 14: passage
- 15: passage
- 16: ridge
- 17: slot
- 18: slot
- 19: side wall
- 20: bottom wall
- 21: slot
- 22: slot
- 23: side wall
- 24: slot
- 25: side wall
- 26: slot
- 27: side wall
- 28: opening
- 29: side wall
- 30: side wall
- 31: connector
- 32: connector
- 33: connector
- 34: connector
- 35: connector
- 36: body
- 37: disk
- 38: slot
- 39: cam
- 40: side wall
- 41: cam
- 42: button
- 45: body
- 46: button
- 47: coupling part
- 48: extension
- 49: cam
- 51: body
- 52: coupling device
- 53: button
- 54: side wall
- 57: body
- 58: coupling part/device
- 59: extension
- 60: ridge
- 65: body
- 66: frame element
- 67: button
- 70: child seat
- 71: seating portion
- 72: backrest portion
- 73: leg rest portion
- 74: sun shielding element
- 80: pram
- 81: shell
- 82: sunroof
- 83: handle
- 90: car seat
- ₉₁: shell
- 100: set
- 101: pram
- 110: toddle board
- 111: element
- 112: curved part
- 113: opening
- 120: pram
- D1: arrow
- D2: arrow
- P1: position
- P2: position
- P3: position
- P4: position
- P5: position

## Claims

1. A set (100) for transporting at least one child, which set comprises at least a stroller (1), a first carrying device and a second carrying device, each carrying device being detachably connectable to the stroller, wherein at least one of the first and second carrying devices is suitable for carrying a child, whilst at least one of the first and second carrying devices is connectable at at least two different positions (P1-P5) on the stroller (1), **characterized in that**
- the first carrying device comprises at least one first connector (31-35) to detachably connect the first carrying device to the stroller (1) at at least a first series of different positions (P1-P5);
- the second carrying device comprises at least one second connector (31-35) to detachably connect the second carrying device to the stroller (1) at at least a second series of different positions(P1-P5);
wherein the second series of positions comprises a limited number of positions of the first series of positions (P1-P5) irrespective if the first carrying device is mounted on the stroller .

2. A set (100) according to claim 1, **characterized in that** the first and/or second carrying device comprises two connectors (31-35) located on opposite sides of the carrying device, whilst the stroller (1) is provided with the at least two different positions (P1-P5) on two longitudinal sides of the stroller (1).

3. A set (100) according to claim 1 or 2, **characterized in that**
- one position of the first series of positions (P1-P5) is provided with at least one first position feature;
- another position of the first series of positions (P1-P5) is provided with at least one second position feature whilst;
- the first connector (31-35) is provided with at least one first connector feature,
- the second connector (31-35) is provided with at least one second connector feature,
wherein the first connector feature is configured for engaging the first and second position features, whilst the second connector feature is configured for engaging only one of the first and second position features.

4. A set (100) according to claim 2 and 3, **characterized in that** the first and second position features on one longitudinal side of the stroller (1) are mirror symmetrical with respect to the first and second position features on the other longitudinal side of the stroller (1).

5. A set (100) according to claim 3 or 4, **characterized in that** at each position of the first and second series of positions (P1-P5) a passage (11-15) is located, wherein the first connector (31-35) can only be inserted in passages (11-15) of the first series of different positions (P1-P5), whilst the second connector (31-35) can only be inserted in passages of the second series of different positions (P1-P5).

6. A set (100) according to one of the preceding claims 3-5, **characterized in that**
- a passage (11-15) at one of the positions of the first series of positions (PiP5) is provided with the at least one first position feature;
- a passage (11-15) at another position of the first series of positions (P1-P5) is provided with the at least one second position feature.

7. A set (100) according to claim 6, **characterized in that** a position feature of one of the passages comprises a ridge (16) extending parallel to the axis of the passage (11-15), whilst a connector feature of a connector (31-35) configured for engaging the respective position feature is provided with a slot (38) for receiving the ridge (16).

8. A set (100) according to claim 7, **characterized in that** the ridge (16) is located in a corner of a rectangular cross section of the passage (11-15).

9. A set (100) to one of the preceding claims 6-8, **characterized in that** a position feature of one of the passages (11-15) comprises two ridges (16) extending parallel to the axis of the passage, whilst a connector feature of a connector (31-35) configured for engaging the respective position feature is provided with two slots (38) for receiving the ridges (16).

10. A set (100) according to claim 9, **characterized in that** the ridges (16) are located in two corners of a rectangular cross section of the passage, which corners are located diagonal opposite to each other.

11. A set (100) to one of the preceding claims 6-10, **characterized in that** a position feature of one of the passages comprises at least one slot (21, 24, 25) provided in a bottom wall (20) of the passage, whilst a connector feature of a connector configured for engaging the respective position feature is provided with at least one extension configured for entering the at least one slot (21, 24, 25).

12. A set (100) according to claim 11, **characterized in that** different passages comprises slots (21, 24, 25) with different length and/or a different number of slots (21, 24, 25), whilst a connector (31-35) feature of a connector configured for engaging the respective position feature is provided with a corresponding number of extensions (48, 59) each having the corresponding length for entering the respective slots.

13. A set (100) to one of the preceding claims 6-12, **characterized in that** a position feature of a passage also comprises a latch feature (17, 18, 22) whilst a connector feature of a connector (31-35) configured for engaging the respective position feature comprises a connector latch feature (39, 41, 49) for securely locking the carrying device to the stroller (1).

14. A set (100) according to claim 13, **characterized in that** the position feature of different passages comprises different latch features, each being suitable for cooperating with a connector latch feature of a connector feature of a connector configured for engaging the respective position feature.

15. A set (100) to one of the preceding claims, **characterized in that** the connector is detachably connected to carrying device.

16. A set (100) according to one of the preceding claims, **characterized in that** the carrying device comprises a car child seat (90), a child seat (70), a pram (100, 120) a toddler board (110) or a storage box.

17. A set (100) according to one of the preceding claims, **characterized in that** the first series of positions (P1-P5) comprises a limited number of positions of the second series of positions.

18. A set (100) according to one of the preceding claims, **characterized in that** at least the first or second carrying device can be detachably connected in a forward facing (FF) and rearward facing (RF) orientation to the stroller (1).

19. A set (100) according to one of the preceding claims, **characterized in that** the set comprises at least a third carrying device comprising at least one third connector (31-35) to detachably connect the third carrying device to the stroller (1) at at least a third series of different positions (P1-P5), wherein the third series of positions (P1-P5) comprises a limited number of positions (P1-P5) of the first and/or second series of positions (P1-P5).

20. A stroller (1) suitable for a set according to one of the preceding claims.

21. A carrying device suitable for a set according to one of the preceding claims.
